# EUROPEAN PATENT SPECIFICATION

(11) **EP 1 749 412 B1**
(45) Date of publication and mention of the grant of the patent: **19.11.2008**
(21) Application number: 05749574.9
(22) Date of filing: 13.05.2005
(51) Int. Cl.: H04Q 7/28, H04Q 7/38

(54) **SYSTEM AND METHOD FOR PROVIDING GROUP VOICE SERVICES IN A WIRELESS NETWORK**
SYSTEM UND VERFAHREN ZUR BEREITSTELLUNG VON GRUPPEN SPRACHDIENSTEN IN EINEM DRAHTLOSEN NETZWERK
SYSTEME ET PROCÉDÉ POUR FOURNIR DES SERVICES D' APPEL DE GROUPE VOCAL DANS UN RÉSEAU SANS FIL

(30) Priority: 14.05.2004 US 571075 P
(43) Date of publication of application: 07.02.2007
(73) Proprietor: Kodiak Networks, Inc., San Ramon, CA 94583 (US)
(72) Inventor: PATEL, Krishnakant, M., Richardson, TX 75082 (US); KUNDU, Gorachand Flat No. 3017, Maruthi, Bangalore, 560017, Karnataka (IN); AYYASAMY, Ravi, Richardson, TX 75082 (US); ARDAH, Basem, Plano, TX 75024 (US)
(74) Representative: Jackson, Martin Peter
(86) International application number: PCT/US2005/016771
(87) International publication number: WO 2005/115032

(56) References cited:
- WO-A-00/79825
- WO-A-03/101007
- US-A1- 2002 196 781

## Description

This invention relates in general to wireless communications systems, and more specifically, to a roaming gateway for support of advanced voice services while roaming in wireless communications systems.

Group-based voice services, such as two-way half-duplex voice calls within a group, also known as "Push-to-Talk," "Press-to-Talk," PTT or P2T, have enormous revenue earnings potential for wireless networks, such as cellular networks and personal communications systems (PCS) networks. Corporate subscribers primarily use such services for coordinating field people or fleet users from a central location.

Currently, there are three major approaches employed in providing group-based voice services such as P2T in wireless networks. One approach requires the installation of a dedicated private network, parallel to the wireless network, to support the group-based voice services. NEXTEL uses such a system, based on a solution developed by MOTOROLA known as IDEN. However, a dedicated private network is costly to install and maintain and is employed by a few public wireless carriers. Also, the IDEN system is non-standard, and hence cannot be used in standard wireless communications networks, such as those based on CDMA and GSM.

Another approach is based on Voice over IP(VoIP) technologies. While this approach promises compliance with newer and emerging standards, such as GPRS (General Packet Radio Service), UMTS (Universal Mobile Telecommunications System), etc. , it does not provide a solution for carriers employing wireless networks based on existing standards, such as GSM (Global System for Mobile Communications), CDMA (Code Division Multiple Access), etc. However, even for the newer standards, solutions based on VoIP have serious drawbacks, including slower call setup, significant overhead, increased susceptibility to packet losses, low bit rate voice coders (vocoders), and significant modifications to the mobile handset. There is a need, instead, for solutions that require only minimal upgrades to the handset.

Still another approach is that defined in the co-pending and commonly-assigned patent applications cross-referenced above and incorporated by reference herein. In this approach, group-based voice services are provided by a real-time exchange or dispatch gateway that interfaces to the wireless network to provide the group-based voice services therein, wherein both the real-time exchange and mobile handsets that use the group-based voice services communicate with each other using call setup and in-band signaling within the wireless network.

Notwithstanding these innovations, there is a need in the art for a roaming gateway for support of advanced voice services while roaming in wireless communications systems. The present invention aims to satisfy this need.

WO-A-03/101007 discloses an apparatus and method for providing group voice services in a wireless network according to the pre-characterising sections of claims 1 and 9.

US-A-2002/0196781 discloses a method of routing calls in a telecommunication system comprising a mobile services switching center (MSC) and a base station connected thereto, and mobile stations wherefrom a telecommunication connection is established by using a first predetermined protocol on a radio connection. The telecommunication system further comprises a packet data network, a server communicating with the MSC and the packet data network, wherefrom a telecommunication connection is established through the packet data network and the server to the MSC. A terminal transmits and receives messages according to a first protocol arranged into the data packets of the packet data network protocol and emulates a mobile station using the first protocol.

WO-A-00/79825 discloses a system that includes a cellular network, a Public Switched Telephone Network (PSTN) and a mobile IP-telephony network (MIPTN). MIPTN subscribers can roam within the MIPTN. Also, a Gateway Function interfaces the PSTN and the MIPTN to allow roaming between the cellular network and the MIPTN. The Gateway Function performs a dynamic mapping function between PSTN/cellular addresses (e.g., in E.164 format) and MIPTN addresses (e.g., IP addresses) to allow registration and call delivery for subscribers roaming between the cellular network and the MIPTN.

### SUMMARY OF THE INVENTION

To overcome the limitations in the prior art described above, and to overcome other limitations that will become apparent upon reading and understanding the present specification, according to one aspect the present invention provides a system arranged for providing group voice services in a wireless network, comprising: a plurality of wireless networks arranged for handling calls between mobile units, wherein the calls are initiated by call setup and in-band signaling within the wireless networks and voice frames for the calls are switched between the mobile units across bearer paths in the wireless networks; and a real-time exchange arranged to interface with a first one of the wireless networks designated as a group home network to provide group voice calls therein, wherein both the real-time exchange and the mobile units that participate in the group voice calls are arranged to communicate with each other using the call setup and in-band signaling within the group home network, and the real-time exchange is arranged to switch the voice frames for the group voice calls from an originating mobile unit to all terminating mobile units across the bearer paths in the wireless networks; characterized in that the system further comprises: a roaming gateway located within the home network arranged to interface to the real-time exchange and at least one mobile switching center within a second one of the wireless networks designated as a foreign network to provide the group voice calls for mobile units roaming in the foreign network, wherein the roaming mobile unit is arranged to originate the group voice call by providing a number for the roaming gateway to the mobile switching center, the mobile switching center is arranged to establish the group voice call with the roaming gateway using the number provided by the roaming mobile unit, and the roaming gateway is arranged to establish a voice path with the roaming mobile unit in order to switch the voice frames for the group voice calls from the roaming mobile unit to all terminating mobile units across the bearer paths in the wireless networks.

According to another aspect, there is provided a method for providing group voice services in a wireless network, comprising: connecting a plurality of wireless networks together for handling calls between mobile units in the wireless networks, wherein the calls are initiated by call setup and in-band signaling within the wireless networks and voice frames for the calls are switched between the mobile units across bearer paths in the wireless networks; and interfacing a real-time exchange with a first one of the wireless network designated as a group home network to provide group voice calls therein, wherein both the real-time exchange and the mobile units that participate in the group voice calls communicate with each other using the call setup and in-band signaling within the group home network, and the real-time exchange switches the voice frames for the group voice calls from an originating mobile unit to all terminating mobile units across the bearer paths in the wireless networks; characterised in that the method further comprises: interfacing a roaming gateway located within the home network to the real-time exchange and at least one mobile switching center within a second one of the wireless networks designated as a foreign network to provide the group voice calls for mobile units roaming in the foreign network, wherein the roaming mobile unit originates the group voice call by providing a number for the roaming gateway to the mobile switching center, the mobile switching center establishes the group voice call with the roaming gateway using the number provided by the roaming mobile unit, and the roaming gateway establishes a voice path with the roaming mobile unit in order to switch the voice frames for the group voice calls from the roaming mobile unit to all terminating mobile units across the bearer paths in the wireless networks.

### BRIEF DESCRIPTION OF THE DRAWING

Referring now to the drawings in which like reference numbers represent corresponding parts throughout:
FIG. 1 is a block diagram that illustrates an exemplary embodiment of a wireless communications network according to a preferred embodiment of the present invention;
FIG. 2 illustrates an architecture for a real-time exchange according to the preferred embodiment of the present invention;
FIG. 3 is a block diagram that illustrates an exemplary embodiment of roaming between home and foreign wireless communications networks according to a preferred embodiment of the present invention;
FIG. 4 is a block diagram that illustrates the major functional blocks in the roaming gateway according to a preferred embodiment of the present invention; and
FIG. 5 is a diagram that illustrates the call flow for a push-to-talk call made by a roaming push-to-talk subscriber according to a preferred embodiment of the present invention.

### DETAILED DESCRIPTION OF THE INVENTION

In the following description of the preferred embodiment, reference is made to the accompanying drawings which form a part hereof, and in which is shown by way of illustration the specific embodiment in which the invention may be practiced. It is to be understood that other embodiments may be utilized as structural changes may be made without departing from the scope of the present invention.

### Overview

The present invention provides a roaming gateway for support of advanced voice services while roaming in wireless communications networks.

### Network Architecture

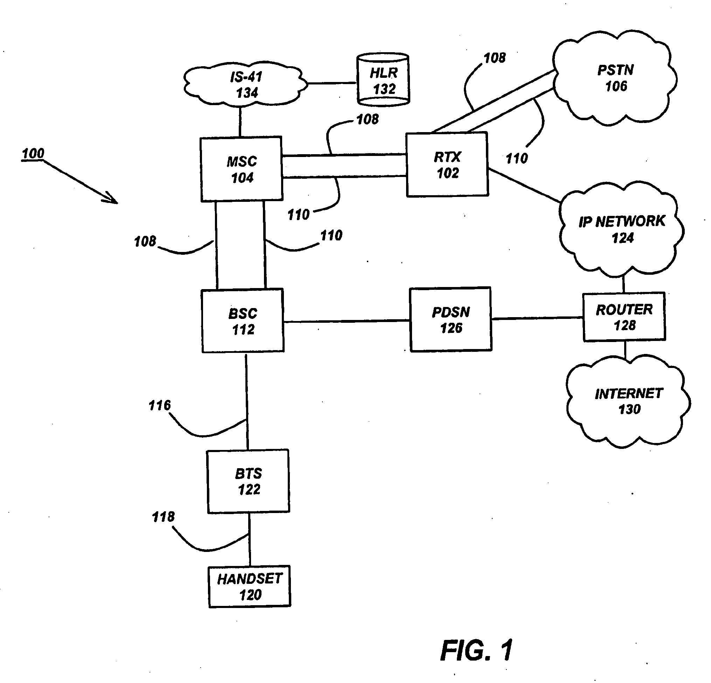

FIG. 1 is a block diagram that illustrates an exemplary embodiment of a wireless communications network according to a preferred embodiment of the present invention.

Within the network 100, an RTX (Real-Time Exchange) 102, previously known as a Dispatch Gateway (DG), communicates with a MSC (Mobile Switching Center) 104 and PSTN (Public Switched Telephone Network) 106 using SS7 - ISUP/WIN/CAMEL (Signaling System 7 - Integrated Services Digital Network User Part/Wireless Intelligent Network/Customized Applications for Mobile Enhanced Logic) messages at a signaling plane 108. A bearer path 110 implements a TDM (Time Division Multiplexing) interface carrying PCM (Pulse Code Modulation) or TFO (Tandem Free Operation) voice frames. Support for TFO in this path 110 is negotiated between a BSC (Base Station Controller) 112 and the RTX 102 for each originating and terminating leg of a group call.

When a subscriber originates a group voice services call, such as a P2T call, the MSC 104 routes the call to the RTX 102. The MSC 104 also requests the BSC 112 via 116 to establish a radio traffic path 118 with a mobile unit or handset 120 via the BTS (Base Transceiver Station) 122 (as it does for a normal cellular call). At this time, the BSC 112 tries to negotiate TFO (if it is supported) on a TDM link with the far end (in this case, the RTX 102).

At the same time (after the MSC 104 terminates the group call request to the RTX 102), the RTX 102 identifies the terminating group users and their MS-ISDN (Mobile Station- Integrated Services Digital Network) numbers. It sends an ISUP call origination request for each terminating handset 120. It may send requests directly to the MSC 104, PSTN 106 or IP network 124 via a PDSN (Public Data Switched Network) 126, Router 128, and/or Internet/Intranet 130, depending on the routing table configuration for terminating MS-ISDN numbers. Once the bearer path 110 is established, the RTX 102 begins a negotiation with the far end (in this case, the terminating BSC 112) for each terminating leg to a handset 120.

Once bearer paths 110 are established for originating and terminating legs for a group call, the RTX 102 switches (or duplicates) voice frames from the originating handset 120 to all terminating handsets 120.

The RTX 102 may use an IP network 124 or the Internet/Intranet 130 for two different purposes. The IP network 124 or the Internet/Intranet 130 can be used in a toll bypass mode where two RTXs 102 can exchange voice traffic bypassing the PSTN 106. However, each RTX 102 is responsible for terminating traffic to its closest MSC 104. In this case, the IP network 124 or the Internet/Intranet 130 is used as a backbone transport of voice traffic between two RTXs 102.

The IP network 124 or the Internet/Intranet 130 can also be used for a registration and presence application. Since the MSC 104 will not direct a registration request from a handset 120 to the RTX 102 (because it would require changes in the MSC 104), the latter does not have any information of the registered handsets 120. To circumvent this issue, a registration and presence application runs over an IP stack in the handset 120. After the handset 120 registers for a data interface (i.e., obtaining an IP address) with the PDSN 126, the registration and presence application in the handset 120 registers with the RTX 102 using its IP address. The RTX 102 also uses this IP interface to update the presence information of other group members to a handset 120. There is also provision to use SMS (Short Message Service) transport to carry presence messages if an operator chooses to use SMS over a data channel.

During roaming, a Home Location Register (HLR) 132 can be accessed via the MSC 104 and an IS-41 link 134. The HLR 132 can be used to track the presence of members of a group within the network and updates the mobile handsets 120 for those members with the network availability of other members of the group.

### Real Time Exchange

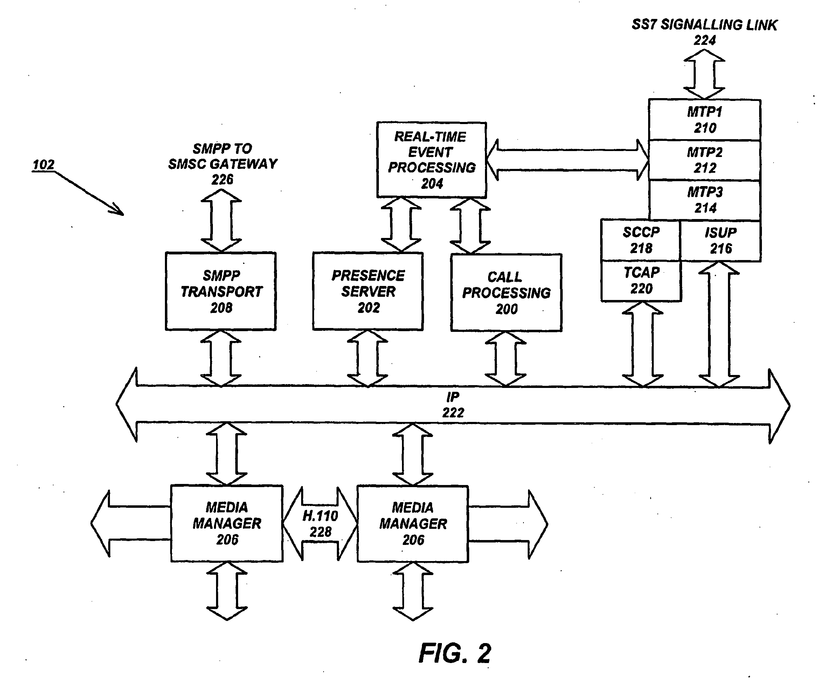

FIG. 2 illustrates an architecture for the RTX 102 according to the preferred embodiment of the present invention.

The architecture includes a Call Processing system 200, Presence Server 202, Real-Time Event Processing system 204, one or more Media Managers 206, and an SMPP (Short Message Peer-to-Peer) Transport 208, as well as modules for various SS7 protocols, such as MTP-1 (Message Transfer Part Level 1) 210, MTP-2 (Message Transfer Part Level 2) 212, MTP-3 (Message Transfer Part Level 3) 214, ISUP (Integrated Services Digital Network User Part) 216, SCCP (Signaling Connection Control Part) 218, and TCAP (Transactions Capabilities Application Part) 220 protocols.

The Call Processing system 200, Presence Server 202, Media Managers 204, SMPP Transport 206, and other modules communicate across an IP network 222. The Real-Time Event Processing system 204 communicates directly with the Call Processing system 200, Presence Server 202, and the modules for various SS7 protocols. The modules for various SS7 protocols communicate with other entities via a SS7 Signaling Link 224. The SMPP Transport 206 communicates with a SMSC (Short Message Service Center) gateway using the SMPP protocol 226. The Media Managers 204 communicate among themselves using the H.110 protocol 228.

The operation of these various components are described in the co-pending and commonly-assigned patent applications cross-referenced above and incorporated by reference herein.

### Roaming Between Networks

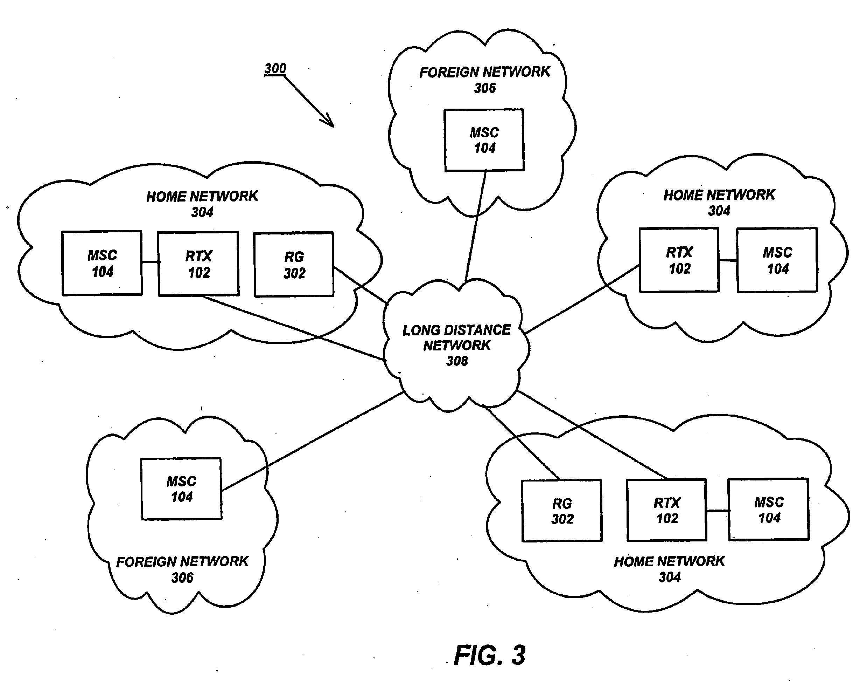

FIG. 3 is a block diagram that illustrates an exemplary embodiment 300 of roaming between home and foreign wireless communications networks according to a preferred embodiment of the present invention. In this diagram, a Roaming Gateway (RG) 302 supports P2T calls when P2T subscribers roam from their home network 304 (i.e., a network 304 operated by their service provider where the subscriber's profile resides) into a foreign network 306 (i.e., a network operated by another service provider). The RG 302 is a specialized version of the RTX 102 that is located in the home network 304, and thus comprises the architecture described in FIG. 2.

The RG 302 is connected to one or more RTXs 102 within the home network 304 through a long distance network 308. The RTX 102 is also connected to at least one MSC 104 within the home network 304 through the long distance network 308 to provide access facilities (local originating and terminating) to P2T subscribers. In addition, the RG 302 is connected to at least one MSC 104 within a foreign network 306 through the long distance network 308, wherein the MSC 104 in the foreign network 306 routes a P2T call via the long distance network 308 to the RG 302 and the RG 302 sets up the P2T call.

When the roaming P2T subscriber wants to originate a P2T call, the P2T client application in the handset 120 originates the call using a Directory Number for the RG 302, so that the MSC 104 in the foreign network 306 can establish a call with the RG 302 (in a manner similar to a mobile originated, land terminated call). The RG 302 authenticates the originating P2T subscriber and establishes a voice path with the handset 120. The RG 302 then receives a group index (in the case of a group call through the voice path) from the handset 120 via DTMF, retrieves a Group ID for identifying the group using the group index, and establishes a call with the RTX 102 in the group home network 304 (i.e., a network 304 operated by their service provider where the group profile resides) through the long distance network 308. The group home RTX 102 terminates the call to all other members of the group. Also, the RG 302 itself can terminate the call to all other members of the group without involving the group home RTX 102, if it stores a copy of the group profile.

### Functional Blocks in the Roaming Gateway

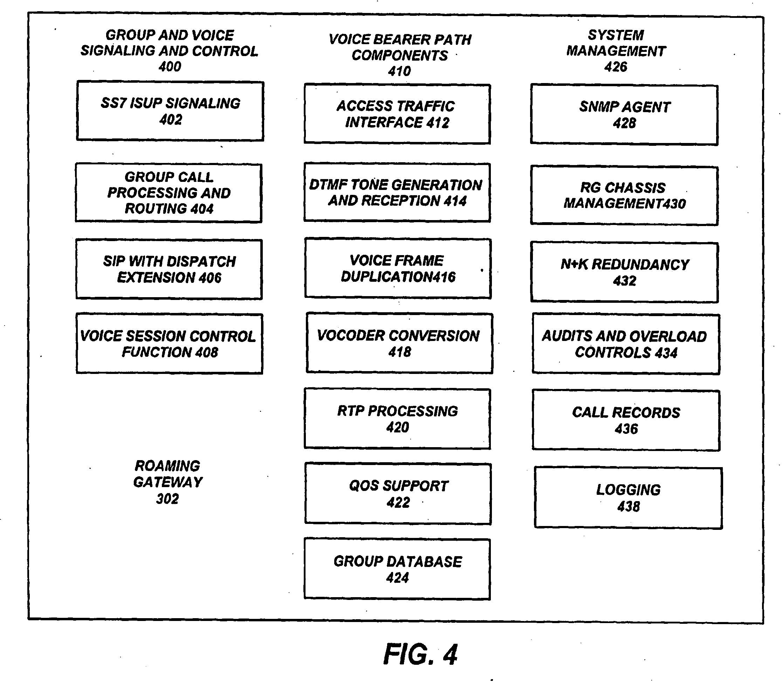

FIG. 4 is a block diagram that illustrates the major functional blocks in the RG 302 according to a preferred embodiment of the present invention.
1. Group Voice Signaling and Control 400 - This subsystem is involved in the control plane for processing group call requests, communicating with the RTX 102, MSC 104 or PSTN 106, controlling its own bearer path ports and handling presence notifications. It consists of following important modules
   - SS7 ISUP, WIN, CAMEL Signaling 402 - This module is responsible for handling all ISUP messages and maintaining ISUP related call state machines. It routinely monitors the health of TDM circuits and initiates/terminates ISUP maintenance requests. It interfaces with group call processing layer to originate or terminate call requests. The WIN/CAMEL interfaces are used by the MSC 104 to notify the RG 302 about the dialed digits (group id) when an origination trigger condition is met. In this way, the RG 302 can start setting up the terminating legs parallel to the originating leg radio setup. This gives faster group call setup.
   - Group Call Processing and Routing 404 - This module processes group call requests, maintains call state machines for each originating and terminating call leg, and routes call according to the called MS-ISDN numbers. It also interfaces with a group and subscriber database for retrieving group and subscriber related information, and validating the subscribers' authenticity. It also controls the floor of the group call by allowing only one user to speak at any time during the call session. A Routing function decides whether the call needs to be terminated to the MSC 104, PSTN 106 or IP network 124 (Inter-RG 302 call to bypass toll).
   - SIP with Dispatch Extension (RG-RTX) 406 - This module enables an RG 302 and RTX 102 to communicate with each other at the signaling plane. The RG 302 and RTX 102 may communicate to establish a call in a toll bypass mode or to retrieve group information for a group from its home RTX 102. They may also exchange signaling messages during a call session to indicate call continuation or call re-initiation requests. Standard SIP message set may need to be modified to suit these RG-RTX group call control features.
   - Voice Session Control Function 408 - This module acts as a media control agent to perform incoming and outgoing port allocation, to control voice frame duplication and media switching. It is a lower layer function to control bearer paths within the system. It also interacts with bearer the path to generate and receive DTMF tones. It interfaces with a group call processing layer to send and receive call control messages.
2. Voice Bearer Path Components 410 - This subsystem is responsible for handling voice frames in the bearer path. It also receives and generates DTMF tones and notifies the media control application. It has following major functional components
   - Access Traffic Interface (TFO/PCM) 412 - This module is responsible for the terminating or originating PCM/TFO interface from/to the MSC 104 or PSTN 106. It handles TFO negotiation procedures with originating and terminating BSC 112. Please note that for a TFO-TFO call (where both originating and terminating legs support TFO), this function does not modify the voice payload content. In this scenario, it just accepts PCM frames from an originating port, buffers it for 20ms, extracts signaling information (if anything is carried) and switches then payload to the terminating legs as a PCM frame (carrying TFO). However, if any of the leg does not support TFO, this function provides input to a vocoder conversion function to change the packet format to PCM for that leg. Please note that all legs of a group call will support PCM, but some of them may support TFO (since TFO requires a BSC 112 upgrade and it is assumed that service providers may not have upgraded all BSCs 112 in their network at the time of deployment of group voice service). The RG 302, by default, will try to negotiate TFO with the remote terminating BSC 112. If the remote BSC 112 doesn't respond, the RG 302 will establish a pure PCM interface.
   - DTMF Tone Generation and Reception 414 - In this architecture, the group voice service application in the mobile handset 120 and the RG 302 exchange a set of defined in-band DTMF tones as call control events to regulate the group call. These include an initiating pause request by the originator, initiating call continuation request by a user and communicating state change requests to the handsets 120 by the RG 302. This functional component sits on the bearer path to detect DTMF tones that are originated by the group voice service application in the handsets 120. Once detected, it notifies the media control function. Similarly, upon receiving instruction from the media control function, it generates DTMF tones to be received and analyzed by the corresponding application in the handsets 120.
   - Voice Frame Duplication 416 - In the group voice application, voice frame duplication plays a key role as incoming frames need to be copied or switched to many outgoing ports. A multicasting control technique is used whereby it reduces number of frames at the back plane for internal frame switching and at the same time minimizes number of packets to be carried to an RTX,102 302 (over the IP network 124) that controls a set of end points of the group call.
   - Vocoder Conversion 418 - A group call can involve legs where some of them do not support TFO. In that scenario, a vocoder conversion is needed at the RG 302 between TFO, which carries an EVRC format payload for CDMA, and EFR/AMR (Enhanced Full Rate/Adaptive Multi Rate) voice coding for GSM, and PCM. An alternate solution to vocoder conversion can be to support all call legs on PCM (every leg supports this as default). But, this would reduce MOS for call legs that support TFO. It is assumed that TFO will be introduced in most parts of the network by the time group service is deployed in the field.
   - RTP Processing (Inter-RG Traffic) 420 -An RG 302 and RTX 102 together may get involved in transporting voice frames over the IP network 124. This is used to bypass the PSTN 106. In this scenario, the RTP protocol is used to carry voice frames either in the form of TFO/PCM (G.711) between the RG 302 and RTX 102. Only one RTP stream is used for a group call between the RG 302 and RTX 102. The receiving RTX 102 may internally connect that single RTP source to many access ports (TDM). Please note that while sending RTP packet, the source RG 302 does not change the voice payload format. The PCM frames (carrying TFO) are buffered and packetized at 20ms interval and sent in an RTP envelope without modifying the content. The receiving RTX 102, depending on supported formats on access legs (PCM or TFO), may change the payload format.
   - QoS (Quality of Service) Support 422 - The RG 302 may require the use of RSVP (Resource Reservation Protocol) or proprietary QoS protocols to indicate high priority for delivering packets carrying voice frames.
3. Group Database 424 - This subsystem is the repository of group subscriber information. The Group Call Processing and Routing 404 and other system provisioning components interact with this subsystem.
   - Group Information Store - This module stores group related information keyed against a unique group id. The group information consists of a set of subscribed members and their privileges. A group may have members located across different regions within a national network. The RTX 102 that holds this information for a specific group is called the group home RTX 102. If a group call request arrives at a RG 302 that does not hold the requested group information, it identifies the group home RG 302 and fetches information from there. It might store that information in its cache temporarily.
   - Subscriber Data - This module stores information of a subscribed group user keyed against the subscriber MS-ISDN and/or internal member id. It stores the subscriber's registration information and the group ids of which he/she is a member. Please note that the subscriber data does not include the information about his/her current location. However, it may be possible to store whether a handset 120 is in its home network 304 or a foreign network 306 by comparing the system id that it sends during group voice registration. This information may be useful in terminating a call to a user directly instead of going to its home network 304.
4. System Management 426 - This subsystem is responsible for managing the hardware and software systems of the RG 302. It has following major functional components: SNMP Agent 428, RG Chassis Management 430, N+K Redundancy 432, Audits and Overload Controls 434, Call Records 436 and Logging 438.

### Presence Functionality Description for CDMA Network

The following steps are performed when a P2T subscriber roams into a foreign CDMA network 306.
1. The P2T client application in the handset 120 detects a System ID (SID) / Network ID (NID) / Registration Zone change and informs the RTX 102 in the home network 304 through SMS messaging, where the SMS message is routed to the home RTX 102, even though the message originates in a foreign network 306. Note that it is assumed that the home network 304 and foreign network 306 have an SMS delivery agreement.
2. The home RTX 102 processes the SMS message and validates the SID/NID/Registration Zone with its database. Since the subscriber is roaming into a foreign network 306, the SID/NID/Registration Zone will not match with any data in the home network 304 and the RTX 102 considers the subscriber as roaming outside the home network 304.
3. Once the home RTX 102 identifies that the subscriber as roaming into a foreign CDMA network 306, it sends a message to the P2T client application in the handset 120 through SMS messaging to inform the P2T client application of the addresses (NANP (North American Numbering Plan) numbers) of the RGs 302. Each RTX 102 is provisioned with the NANP numbers of at least two RGs 302 located in the home network 304 and connected to the foreign network 306.
4. The RTX 102 also pushes the subscriber's profile and group index information to those RGs 302.

### Presence Functionality Description for GSM Network

The following steps are performed when a P2T subscriber roams into a foreign GSM network 306.
1. The P2T client application in the handset 120 detects a MCC (mobile country code) / MNC (mobile network code) / LACID (location area code identifier) change and informs the RTX 102 in the home network 304 through SMS messaging, where the SMS message is routed to the home RTX 102, even though the message is originated in foreign network 306. Again, it is assumed that the home network 304 and foreign network 306 have an SMS delivery agreement.
2. The subscriber's home RTX 102 processes the SMS message and validates the MCC/MNC/LACID with its database. Since the subscriber is roaming into a foreign network 306, the MCC/MNC/LACID will not match with any data in home network 304 and the RTX 102 considers the subscriber as roaming outside the home network 304.
3. Once the home RTX 102 identifies that the subscriber is roaming into a foreign network 306, it sends a message to the P2T client application in the handset 120 through SMS messaging to inform the P2T client application of the addresses (E. 164 numbers) of the RGs 302. Each RTX 102 is provisioned with the addresses of at least two RGs 302 located in the home network 304 and connected to the foreign network 306.
4. The RTX 102 also pushes the subscriber's profile and group index information to those RGs 302.

### Originating a Roaming P2T Call

When the roaming P2T subscriber wants to originate a P2T call, the P2T client application in the handset 120 sends a setup message to the foreign MSC 104 to establish a call with one of the RGs 302 (in a manner similar to a mobile originated, land terminated call). The RG 302 establishes a voice path to the P2T client application in the handset 120, and receives a Security Code (SC) and Dialed Digits (DD) from the P2T client application through the voice path. The RG 302 then authenticates the originating P2T subscriber, and analyzes the DD to establish various P2T calls by: (1) establishing a private call directly to the terminating leg, and/or (2) tunneling the call to the home RTX 102 so that the home RTX 102 can establish all the terminating legs.

The specifics of these steps are provided below.

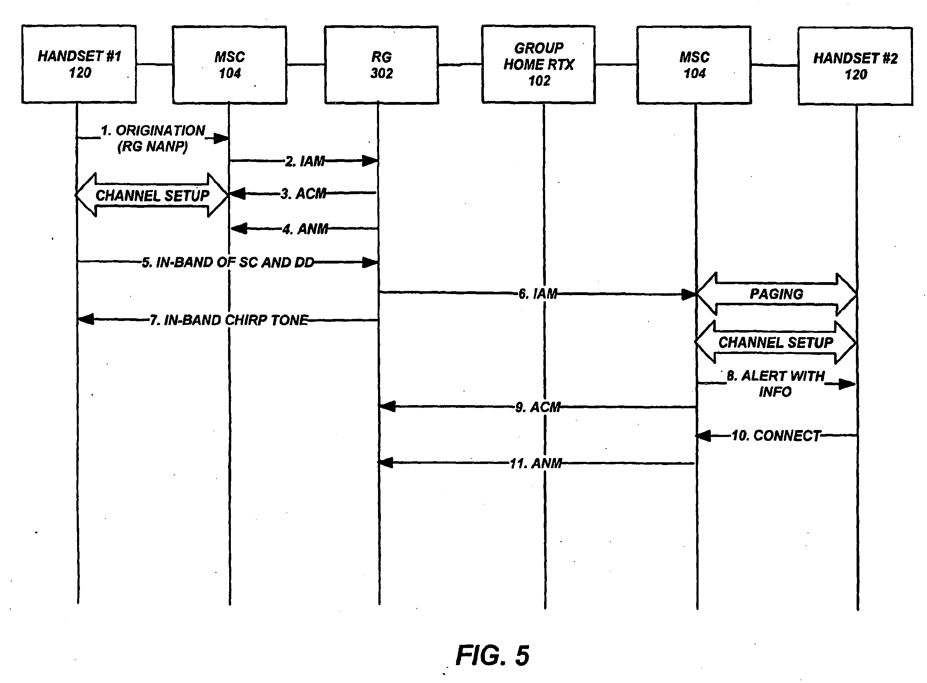

FIG. 5 is a diagram that illustrates the call flow for a P2T call made by a roaming P2T subscriber according to a preferred embodiment of the present invention.
1. The first or originating handset 120 (identified in the figure as handset #1) requests a call origination from the MSC 104, using the NANP number of the RG 302.
2. The MSC 104 sends an IAM (Initial Address Message) message to the RG 302.
3. The RG 302, after receiving the IAM from the MSC 104, authenticates the P2T subscriber and then responds to the MSC 104 with an ACM (Address Complete Message), and subsequently an ANM (Answer Message).
4. The first handset 120 uses in-band signaling to transmit a security code (SC) and dialed digits (DD) to the RG 302 via the MSC 104. The RG 302 uses the security code and dialed digits to determine the group index.
5. The RG 302 sends an IAM (Initial Address Message) message, with the group index, to the group home RTX 102, which forwards the LAM on to the MSC 104 serving the second or terminating handset 120 (identified in the figure as handset #2).
6. The RG 302 sends an in-band chirp tone to the first handset 120, and starts voice buffering.
7. The MSC 104 triggers the paging procedure followed by the channel setup for the second handset 120.
8. Assuming that the second handset 120 responds to the page, the MSC 104 sends an "Alert with Info" message to the second handset 120 to trigger alerting at the second handset 120.
9. The MSC 104 responds to the RG 302 with an ACM (Address Complete Message), via the group home RTX 102.
10. The MSC 104 receives a connect from the second handset 120.
11. The MSC 104 sends an ANM (Answer Message) to the RG 302, via the group home RTX 102, which completes the one-way voice path from the originating handset 120 to terminating handset 120.

The above sequence differs somewhat depending on whether a P2T private or group call is being attempted. These differences are described below.

### Originating a P2T Private Call

When the roaming P2T subscriber originates a private P2T call, the P2T client application in the handset 120 performs the following:
1. Dials out a Directory Number (DN), which is dedicated for the private call, to the RG 302.
2. When the call becomes active, the P2T client application needs to: a) wait for the expiration of the "DTMF dial attempt defer" duration, and then b) dial out the following sequence: 1) routing delimiter, 2) security code (SC), 3) routing delimiter, 4) dialed digits (DD) representing the private call, and 5) routing delimiter, via the bearer path and in a DTMF format.

The RG 302 performs the following:
1. Answer the call and set up the bearer path to the originating leg.
2. Collect all the DTMF digits, identify the private call, and set up the terminating leg directly, without involving the home RTX 102. Note that a chirp tone is provided by the RG 302 to the originating leg.

### Originating a P2T Group Call

When the roaming P2T subscriber originates a group P2T call, the P2T client application in the handset 120 performs the following:
1. Dials out a Directory Number (DN), which is dedicated for the group call, to the RG 302.
2. When the call becomes active, the P2T client application needs to: a) wait for the expiration of the "DTMF dial attempt defer" duration, and then b) dial out the following sequence: 1) routing delimiter, 2) security code (SC), 3) routing delimiter, 4) dialed digits (DD) representing the group call and 5) routing delimiter, via the bearer path and in a DTMF format.

The RG 302 performs the following:
1. Answer the call and set up the bearer path toward the originating leg.
2. Collect all the DTMF digits, identify the group call, and set up the terminating leg by: a) tunneling the call to the group home RTX 102, or b) establishing terminating legs to members within the group. Note that, for option a), a chirp tone is provided by the group home RTX 102. On the other hand, for option b), the chirp tone is provided by the RG 302.

### Call Termination to a Roamed P2T Subscriber

For a private P2T call, the RG 302 handles the terminating leg, whether the terminating P2T subscriber is currently roaming outside the home network 304 or not.

For a group P2T call, the RG 302 may or may not handle the terminating legs, whether the terminating P2T subscribers are currently roaming outside the home network 304 or not, based on the configuration.

### Roaming Client De-Registration

When the P2T subscriber moves into its home network 304 from a foreign network 306, the P2T client application in the handset 120 updates its location by sending a message to the home RTX 102. Subsequent to this procedure, the P2T client application shall adopt a normal P2T call setup procedure.

### Conclusion

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not with this detailed description, but rather by the claims appended hereto.

## Claims

1. System arranged for providing group voice services in a wireless network, comprising:
a plurality of wireless networks (100) arranged for handling calls between mobile units (120), wherein the calls are initiated by call setup and in-band signaling within the wireless networks (100) and voice frames for the calls are switched between the mobile units (120) across bearer paths (110) in the wireless networks (100); and
a real-time exchange (102) arranged to interface with a first one of the wireless networks (100) designated as a group home network (304) to provide group voice calls therein, wherein both the real-time exchange (102) and the mobile units (120) that participate in the group voice calls are arranged to communicate with each other using the call setup and in-band signaling within the group home network (304), and the real-time exchange (102) is arranged to switche the voice frames for the group voice calls from an originating mobile unit (120) to all terminating mobile units (120) across the bearer paths (110) in the wireless networks (100);
**characterised in that** the system further comprises:
a roaming gateway (302) located within the home network (304) arranged to interface to the real-time exchange (102) and at least one mobile switching center (104) within a second one of the wireless networks (100) designated as a foreign network (306) to provide the group voice calls for mobile units (120) roaming in the foreign network (306), wherein the roaming mobile unit (120) is arranged to originate the group voice call by providing a number for the roaming gateway (302) to the mobile switching center (104), the mobile switching center (104) is arranged to establishe the group voice call with the roaming gateway (302) using the numbers provided by the roaming mobile unit (120), and the roaming gateway (302) is arranged to establishe a voice path with the roaming mobile unit (120) in order to switch the voice frames for the group voice calls from the roaming mobile unit (120) to all terminating mobile units (120) across the bearer paths (110) in the wireless networks (100).

2. The system of claim 1, wherein the group voice calls comprise instant two-way half-duplex voice messaging within a group of mobile units (120) of the wireless networks (100).

3. The system of claim 2, wherein the instant two-way hall-duplex voice messaging comprises a Push To Talk (P2T) service.

4. The system of claim 1, wherein the home network (304) is a network (100) operated by a subscriber's service provider and the foreign network (306) is a network (100) operated by another service provider.

5. The system of claim 1, wherein the mobile switching center (104) is arranged to route the group voice call to the roaming gateway (302), and the roaming gateway is arranged to (302) set up the group voice call.

6. The system of claim 1, wherein the roaming gateway (302) is arranged to authenticate the roaming mobile unit (120) and to establishe a voice path with the roaming mobile unit (120).

7. The system of claim 1, wherein the roaming gateway (302) is arranged to identifie a group using information from the roaming mobile unit (120) and to terminate the call with other group members.

8. The system of claim 1, wherein the roaming gateway (302) is arranged to establishe the group voice call with the real-time exchange (102) and the real-time exchange (102) is arranged to terminate the group voice call with the other group members.

9. A method for providing group voice services in a wireless network, comprising:
connecting a plurality of wireless networks (100) together for handling calls between mobile units (120) in the wireless networks (100), wherein the calls are initiated by call setup and in-band signaling within the wireless networks (100) and voice frames for the calls are switched between the mobile units (120) across bearer paths (110) in the wireless networks (100); and
interfacing a real-time exchange (102) with a first one of the wireless networks (100) designated as a group home network (304) to provide group voice calls therein, wherein both the real-time exchange (102) and the mobile units (120) that participate in the group voice calls communicate with each other using the call setup and in-band signaling within the group home network (304), and the real-time exchange (102) switches the voice frames for the group voice calls from an originating mobile unit (120) to all terminating mobile units (120) across the bearer paths (110) in the wireless networks (100);
**characterised in that** the method further comprises:
interfacing a roaming gateway (302) located within the home network (304) to the real-time exchange (102) and at least one mobile switching center (104) within a second one of the wireless networks (100) designated as a foreign network (306) to provide the group voice calls for mobile units (120) roaming in the foreign network (306), wherein the roaming mobile unit (120) originates the group voice call by providing a number for the roaming gateway (302) to the mobile switching center (104), the mobile switching center (104) establishes the group voice call with the roaming gateway (302) using the number provided by the roaming mobile unit (120), and the roaming gateway (302) establishes a voice path with the roaming mobile unit (120) in order to switch the voice frames for the group voice calls from the roaming mobile unit (120) to all terminating mobile units (120) across the bearer paths (110) in the wireless networks (100).

10. The method of claim 9, wherein the group voice calls comprise instant two-way half-duplex voice messaging within a group of mobile units (120) of the wireless networks (100).

11. The method of claim 10, wherein the instant two-way half-duplex voice messaging comprises a Push To Talk (P2T) service.

12. The method of claim 9, wherein the home network (304) is a network (100) operated by a subscriber's service provider and the foreign network (306) is a network (100) operated by another service provider.

13. The method of claim 9, wherein the mobile switching center (104) routes the group voice call to the roaming gateway (302), and the roaming gateway (302) sets up the group voice call.

14. The method of claim 9, wherein the roaming gateway (302) authenticates the roaming mobile unit (120) and establishes a voice path with the roaming mobile unit (120).

15. The method of claim 9, wherein the roaming gateway (302) identifies a group using information from the roaming mobile unit (120) and terminates the call with other group members.

16. The method of claim 9, wherein the roaming gateway (302) establishes the group voice call with the real-time exchange (102) and the real-time exchange (102) terminates the group voice call with the other group members.

## Patentansprüche

1. System, das ausgestattet ist zum Bereitstellen von Gruppen Sprachdiensten in einem drahtlosen Netzwerk, mit
einer Mehrzahl von drahtlosen Netzwerken (100), die ausgestattet sind zum Behandeln von Anrufen zwischen mobilen Einheiten (120), wobei die Anrufe durch Anrufaufbau und bandinterne Signalgebung innerhalb der drahtlosen Netzwerke (100) initiiert und Sprachrahmen für die Anrufe zwischen den mobilen Einheiten (120) über Trägerpfade (110) in den drahtlosen Netzwerken (100) geschaltet werden; und
einer Echtzeit-Vermittlung (102), die ausgestattet ist zum Verbinden mit einem der drahtlosen Netzwerke (100), das als eine Gruppen-Heimnetzwerke (304) ausgelegt ist, um darin Gruppen-Sprachanrufe bereitzustellen, wobei die Echtzeit-Vermittlung (102) und die mobilen Einheiten (120), die an den Gruppen-Sprachanrufen teilnehmen, angeordnet sind, um miteinander zu kommunizieren unter Verwendung des Anrufaufbaus und der bandinternen Signalgebung innerhalb des Gruppen-Heimnetzwerks (304), und die Echtzeit-Vermittlung (102) ausgestattet ist zum Schalten der Sprachrahmen für die Gruppen-Sprachanrufe von einer veranlassenden Mobileinheit (120) zu allen End-Mobileinheiten (120) über die Trägerpfade (110) in den drahtlosen Netzwerken (100);
**dadurch gekennzeichnet, dass** das System ferner aufweist:
ein Roaming-Gateway (302), das innerhalb des Heimnetzwerks (304) lokalisiert und ausgestattet ist zum Verbinden mit der Echtzeit-Vermittlung (102) und mindestens einem mobilen Schaltzentrum (104) innerhalb eines zweiten der drahtlosen Netzwerke (100), das als fremdes Netzwerk (306), ausgelegt ist, zum Bereitstellen der Gruppen-Sprachanrufe für die mobilen Einheiten (120), die in dem fremden Netzwerk (306) erreichbar sind, wobei die Roaming-Mobileinheit (120) ausgestattet ist zum Veranlassen des Gruppen-Sprachanrufs durch Bereitstellen einer Anzahl für das Roaming-Gateway (302) an das mobile Schaltzentrum (104), das mobile Schaltzentrum (104) ausgestattet ist zum Aufbauen des Gruppen-Sprachannifs mit dem Roaming-Gateway (302) unter Verwendung der Anzahl, die durch die Roaming-Mobileinheit (120) bereitgestellt wird, und das Roaming-Gatevray (302) ausgestattet ist zum Aufbauen eines Sprachpfads mit der Roaming-Mobileinheit (120), um die Sprachrahmen für die Gruppen-Sprachanrufe von der Roaming-Mobileinheit (120) zu allen End-Mobileinheiten (120) über die Trägerpfade (110) in den drahtlosen Netzwerken (100) zu schalten.

2. System nach Anspruch 1, wobei die Gruppen-Sprachanrufe einen sofortigen Zwei-Wege Halb-Duplex Sprachdatentransfer innerhalb einer Gruppe von Mobileinheiten (120) der drahtlosen Netzwerke (100) aufweisen.

3. System nach Anspruch 2, wobei der sofortige Zwei-Wege Halb-Duplex Sprachdatentransfer einen Push-To-Talk (P2T) Dienst aufweist.

4. System nach Anspruch 1, wobei das Heimnetzwerk (304) ein Netzwerk (100) ist, das durch einen Dienstanbieter eines Teilnehmers betrieben wird, und das fremde Netzwerk (306) ein Netzwerk (100) ist, das durch einen anderen Dienstanbieter betrieben wird.

5. System nach Anspruch 1, wobei das mobile Schaltzentrum (104) ausgestattet ist zum Weiterleiten des Gruppen-Sprachanrufs an das Roaming-Gateway (302), und das Roaming-Gateway ausgestattet ist zum Aufbauen des Gruppen-Sprachanrufs.

6. System nach Anspruch 1, wobei das Roaming-Gateway (302) ausgestattet ist zum Authentisieren der Roaming-Mobileinheit (120) und zum Aufbauen eines Sprachpfads mit der Roaming-Mobileinheit (120),

7. System nach Anspruch 1, wobei das Roaming-Gateway (302) ausgestattet ist zum Identifizieren einer Gruppenbenutzungsinformation von der Roaming-Mobileinheit (120) und zum Beenden des Anrufs mit anderen Gruppenmitgliedem.

8. System nach Anspruch 1, wobei das Roaming-Gateway (302) ausgestattet ist zum Aufbauen des Gruppen-Sprachanrufs mit der Echtzeit-Vermittlung (102) und die Echtzeit-Vennittlung (102) ausgestattet ist zum Beenden des Gruppen-Sprachanrufs mit den anderen Gruppenmitgliedern.

9. Verfahren zum Bereitstellen von Gruppen-Sprachdiensten in einem drahtlosen Netzwerk, mit
Verbinden einer Mehrzahl von drahtlosen Netzwerken (100) miteinander zum Behandeln von Anrufen zwischen mobilen Einheiten (120) in den drahtlosen Netzwerken (100), wobei die Anrufe initiiert werden durch einen Anrufaufbau und eine bandinterne Signalgebung innerhalb der drahtlosen Netzwerke (100) und Sprachrahmen für die Anrufe zwischen den mobilen Einheiten (120) über Trägerpfade (110) in den drahtlosen Netzwerken (100) geschaltet werden; und
Verbinden einer Echtzeit-Vermittlung (102) mit einem der drahtlosen Netzwerke (100), das als ein Gruppen-Heimnetzwerk (304) ausgelegt ist, um darin Gruppen-Sprachanrufe bereitzustellen, wobei die Echtzeit- Vermittlung (102) und die mobilen Einheiten (120), die an den Gruppen-Sprachanrufen teilnehmen, miteinander kommunizieren, indem der Anrufaufbau und die bandinterne Signalgebung innerhalb des Gruppen-Heimnetzwerks (304) verwendet werden, und die Echtzeit-Vermittlung (102) die Sprachrahmen für die Gruppen-Sprachanrufe von einer veranlassenden Mobileinheit (120) an alle End-Mobileinheiten (120) über die Trägerpfade (110) in den drahtlosen Netzwerken (100) schaltet; **dadurch gekennzeichnet, dass** das Verfahren aufweist:
Verbinden eines Roaming-Gateways (302), das innerhalb des Heimnetzwerks (304) lokalisiert ist, mit der Echtzeit-Vernittlung (102) und mindestens einem mobilen Schaltzentrum (104) innerhalb eines zweiten der drahtlosen Netzwerke (100), das als ein fremdes Netzwerk (306) ausgelegt ist, um Gruppen-Sprachanrufe für mobile Einheiten (120) bereitzustellen, die in das Fremdnetzwerk (306) erreichbar sind, wobei die Roaming-Mobileinheit (120) den Gruppen-Sprachanruf hervorbringt, indem eine Anzahl für das Roaming-Gateway (302) an das Mobilschaltzentrum (104) geliefert wird, das mobile Schaltzentrum (104) den Gruppen-Sprachanruf mit dem Roaming-Gateway (302) aufbaut unter Verwendung der Anzahl, die von der Roaming-Mobileinheit (120) geliefert wird, und das Roatning-Gateway (302) einen Sprachpfad mit der Roaming-Mobileinheit (120) aufbaut, um die Sprachrahmen für die Gruppen-Sprachanrufe von der Roaming-Mobileinheit (120) an alle End-Mobileinheiten (120) über die Trägerpfade (110) in den drahtlosen Netzwerken (100) zu schalten.

10. Verfahren nach Anspruch 9, wobei die Gruppen-Sprachanrufe einen sofortigen Zwei-Wege Halb-Duplex Sprachdatentransfer innerhalb einer Gruppe von Mobileinheiten (120) der drahtlosen Netzwerke (100) aufweisen.

11. Verfahren nach Anspruch 10, wobei der sofortige Zwei-Wege Halb-Duplex Sprachdatentransfer einen Push-To-Talk (P2T) Dienst aufweist.

12. Verfahren nach Anspruch 9, wobei das Heimnetzwerk (304) ein Netzwerk (100) ist, das durch einen Dienstanbieter des Teilnehmers betrieben wird, und das fremde Netzwerk (306) ein Netzwerk (100) ist, das von einem anderen Dienstanbieter betrieben wird.

13. Verfahren nach Anspruch 9, wobei das mobile Schaltzentrum (104) den Gruppensprachanruf an das Roaming-Gateway (302) weiterleitet, und das Roaming-Gateway (302) den Gruppensprachanruf aufbaut.

14. Verfahren nach Anspruch 9, wobei das Roaming-Gateway (302) die Roaming-Mobileinheit (120) authentisiert und einen Sprachpfad mit der Roaming-Mobileinheit (120) aufbaut.

15. Verfahren nach Anspruch 9, wobei das Roaming-Gateway (302) eine Gruppenverwendungsinformation von der Roaming-Mobileinheit (120) identifiziert und den Anruf mit anderen Gruppenmitgliedern beendet.

16. Verfahren nach Anspruch 9, wobei das Roaming-Gateway (302) den Gruppen-Sprachanruf mit der Echtzeit-Vermittlung (102) aufbaut und die Echtzeit-Vermittlung (102) den Gruppen-Spzachanruf mit den anderen Gruppenmitgliedern beendet.

## Revendications

1. Système agencé pour fournir des services vocaux de groupe dans un réseau sans fil, comportant :
une pluralité de réseaux sans fil (100) agencés pour traiter des appels entre des unités mobiles (120), où les appels sont initiés par l'établissement d'une communication et une signalisation en bande à l'intérieur des réseaux sans fil (100) et des trames vocales pour les appels sont commutées entre les unités mobiles (120) grâce à des trajets supports (110) dans les réseaux sans fil (100) ; et
un échange en temps réel (102) agencé pour établir une interface avec un premier de réseau sans fil (100) désigné par réseau domestique de groupe (304) pour fournir des appels vocaux de groupe, où à la fois l'échange en temps réel (102) et les unités mobiles (120) qui participent aux appels vocaux de groupe sont agencés pour communiquer l'un avec l'autre en utilisant l'établissement d'une communication et la signalisation en bande à l'intérieur du réseau domestique de groupe (304), et l'échange en temps réel (102) est agencé pour commuter les trames vocales pour des appels vocaux de groupe à partir d'une unité mobile d'origine (120) à toutes les unités mobiles terminales (120) par l'intermédiaire des trajets supports (110) dans les réseaux sans fil (100) ;
**caractérisé en ce que** le système comporte en outre :
une passerelle itinérante (302) située dans le réseau domestique (304) agencée pour établir une interface avec l'échange en temps réel (102) et au moins un centre de commutation mobile (104) à l'intérieur d'un second des réseaux sans fil (100) désigné comme réseau étranger (306) pour fournir des appels vocaux de groupe à des unités mobiles (120) se situant dans le réseau étranger (306), où l'unité mobile itinérante (120) est agencée pour émettre l'appel vocal de groupe en fournissant un numéro pour la passerelle itinérante (302) au centre de commutation mobile (104), le centre de commutation mobile (104) est agencé pour établir l'appel vocal de groupe avec la passerelle itinérante (302) en utilisant le numéro délivré par l'unité mobile itinérante (120), et la passerelle itinérante (302) est agencée pour établir un trajet vocal avec l'unité mobile itinérante (120) afin de commuter les trames vocales pour les appels vocaux de groupe à partir de l'unité mobile itinérante (120) à toutes les unités mobiles terminales (120) par l'intermédiaire des trajets supports (110) dans les réseaux sans fil (100).

2. Système selon la revendication 1, dans lequel les appels vocaux de groupe comportent une messagerie vocale semi-duplex à deux voies instantanée à l'intérieur d'un groupe d'unités mobiles (120) des réseaux sans fil (100).

3. Système selon la revendication 2, dans lequel la messagerie vocale semi-duplex à deux voies instantanée comporte un service Push To Talk (P2T).

4. Système selon la revendication 1, dans lequel le réseau domestique (304) est un réseau (100) activé par un fournisseur de services d'abonnés et le réseau étranger (306) est un réseau (100) activé par un autre fournisseur de services.

5. Système selon la revendication 1, dans lequel le centre de commutation mobile (104) est agencé pour acheminer l'appel vocal de groupe vers la passerelle itinérante (302), et la passerelle itinérante (302) est agencée pour configurer l'appel vocal de groupe.

6. Système selon la revendication 1, dans lequel la passerelle itinérante (302) est agencée pour authentifier l'unité mobile itinérante (120) et pour établir un trajet vocal avec l'unité mobile itinérante (120).

7. Système selon la revendication 1, dans lequel la passerelle itinérante (302) est agencée pour identifier un groupe utilisant une information provenant de l'unité mobile itinérante (120) et pour mettre fin à l'appel avec les autres membres du groupe.

8. Système selon la revendication 1, dans lequel la passerelle itinérante (302) est agencée pour établir l'appel vocal de groupe avec l'échange en temps réel (102) et l'échange en temps réel (102) est agencé pour mettre fin à l'appel vocal de groupe avec les autres membres du groupe.

9. Procédé pour fournir des services vocaux de groupe dans un réseau sans fil, comportant :
la connexion d'une pluralité de réseaux sans fil (100) conjointement pour traiter des appels entre des unités mobiles (120) dans des réseaux sans fil (100), où les appels sont initiés par l'établissement d'une communication et la signalisation en bande à l'intérieur des réseaux sans fil (100) et des trames vocales pour les appels sont commutées entre les unités mobiles (120) par l'intermédiaire de trajets supports (110) dans les réseaux sans fil (100) ; et
l'interface d'un échange en temps réel (102) avec un premier des réseaux sans fil (100) désigné comme réseau domestique de groupe (304) pour délivrer des appels vocaux de groupe, où à la fois l'échange en temps réel (102) et les unités mobiles (120) qui participent aux appels vocaux de groupe communiquent les uns avec les autres en utilisant l'établissement d'une communication et la signalisation en bande à l'intérieur du réseau domestique de groupe (304), et l'échange en temps réel (102) connecte les trames vocales pour les appels vocaux de groupe depuis une unité mobile d'origine (120) à toutes les unités mobiles terminales (120) par l'intermédiaire des trajets supports (110) dans les réseaux sans fil (100) ;
**caractérisé en ce que** le procédé comporte en outre ;
l'interface d'une passerelle itinérante (302) située à l'intérieur du réseau domestique (304) pour l'échange en temps réel (102) et au moins un centre de commutation mobile (104) à l'intérieur d'un second des réseaux sans fil (100) désigné par réseau étranger (306) pour délivrer des appels vocaux de groupe pour les unités mobiles (en 20) se situant dans le réseau étranger (306), où l'unité mobile itinérante (120) émet l'appel vocal de groupe en délivrant un numéro pour la passerelle itinérante (302) au centre de commutation mobile (104), le centre de commutation mobile (104) établit l'appel vocal de groupe avec la passerelle itinérante (302) en utilisant le numéro délivré par l'unité mobile itinérante (120), et la passerelle itinérante (302) établit un trajet vocal avec l'unité mobile itinérante (120) afin de commuter les trames vocales pour les appels vocaux de groupe à partir de l'unité mobile itinérante (120) à toutes les unités mobiles terminales (120) par l'intermédiaire des trajets supports (110) dans les réseaux sans fil (100).

10. Procédé selon la revendication 9, dans lequel les appels vocaux de groupe comprennent une messagerie vocale semi-duplex à deux voies instantanées à l'intérieur d'un groupe d'unités mobiles (120) de réseaux sans fil (100).

11. Procédé selon la revendication 10, dans lequel la messagerie vocale semi-duplex à deux voies instantanées comprend un Push To Talk (P2T).

12. Procédé selon la revendication 9, dans lequel le réseau domestique (304) est un réseau (100) activé par un fournisseur de services d'abonnés et le réseau étranger (306) est un réseau (100) activé par un autre fournisseur de services.

13. Procédé selon la revendication 9, dans lequel le centre de commutation mobile (104) achemine l'appel vocal de groupe à la passerelle itinérante (302), et la passerelle itinérante (302) configure l'appel vocal de groupe.

14. Procédé selon la revendication 9, dans lequel la passerelle itinérante (302) authentifie l'unité mobile itinérante (120) et établit un trajet vocal avec l'unité mobile itinérante (120).

15. Procédé selon la revendication 9, dans lequel la passerelle itinérante (302) identifie un groupe en utilisant une information provenant de l'unité mobile itinérante (120) et met fin à l'appel avec les autres membres du groupe.

16. Procédé selon la revendication 9, dans lequel la passerelle itinérante (302) établit l'appel vocal de groupe avec l'échange en temps réel (102) et l'échange en temps réel (102) met fin à l'appel vocal de groupe avec les autres membres du groupe.
